# EUROPÄISCHE PATENTSCHRIFT

(11) **EP 0 803 037 B1**
(45) Veröffentlichungstag und Bekanntmachung des Hinweises auf die Patenterteilung: **19.01.2000**
(21) Anmeldenummer: 95940240.5
(22) Anmeldetag: 24.11.1995
(51) Int. Cl.: F16K 27/04, B22D 19/00

(54) **VENTILGEHÄUSE AUS METALL UND KERNFORM ZU DESSEN HERSTELLUNG**
METAL VALVE HOUSING AND CORE MOLD FOR ITS MANUFACTURE
CORPS DE SOUPAPE EN METAL ET NOYAU DE MOULE POUR SA FABRICATION

(30) Priorität: 11.01.1995 DE 19500605
(43) Veröffentlichungstag der Anmeldung: 29.10.1997
(73) Patentinhaber: Mannesmann Rexroth Aktiengesellschaft, 97816 Lohr am Main (DE)
(72) Erfinder: LUKASCZYK, Wolfgang, D-97816 Lohr (DE); RÜB, Karl, D-97737 Gemünden (DE)
(86) Internationale Anmeldenummer: EP9504633
(87) Internationale Veröffentlichungsnummer: WO9621818

(56) Entgegenhaltungen:
- DE-A- 1 295 944
- DE-A- 2 161 386
- DE-A- 2 648 729
- DE-U- 9 407 083
- FR-A- 2 594 518
- FR-A- 2 596 487
- US-A- 4 516 594

## Beschreibung

Die Erfindung betrifft ein Ventilgehäuse aus Metall mit hochbeanspruchten Gehäusebereichen und den Merkmalen aus dem Oberbegriff des Anspruchs 1.

Ein Schieberventil mit einem solchen Ventilgehäuse ist zum Beispiel aus der DE 36 44 269 Al bekannt. Bei diesem Ventil bestehen die Gehäusestege ganz aus Gußeisen. Bei der Bearbeitung und auch während des Betriebs besteht die Gefahr, daß Gußeisenmaterial wegbricht und dadurch das Ventilgehäuse nicht mehr zu gebrauchen ist.

Bei Ventilen, die für aggressive Medien bestimmt sind, ist es bekannt, das Gehäuse mit einem gegenüber dem Medium widerstandsfähigen Material auszukleiden (DE 26 48 729 A1). Das Gehäuse dient bei diesem bekannten Ventil lediglich zur Abstützung der Auskleidung.

Bei einem Wegeventilgehäuse nach der DE 21 61 386 C2 besteht das Ventilgehäuse aus Kunststoff, der die für die Ventilfunktion bestimmten metallischen Teile wie Führungsbüchse mit Steuerkanten für den Steuerkolben und Zu- und Abführungsleitungen umschließt sowie die Befestigungsplatte aufnimmt. Ferner ist durch die DE 12 95 944 ein Ventilstößel bekannt, der als Verbundkörper aus Gußeisen und Stahl hergestellt ist. Der Gußeisenabschnitt wird an dem Stahlabschnitt durch geeignete Maßnahmen angegossen.

Bei einem aus der FR-A 2 596 487 bekannten Sitzventil wird der Ventilsitz durch einen eingegossenen Metallring gebildet. Die eine axiale Stirnfläche des Metallrings ist anders als bei einem Schieberventil zwangsläufig frei von Gußmaterial, da dort das Schließglied auf dem Sitz aufsitzen muß. Der freien Stirnfläche an dem Metallring bei dem Ventil nach der FR-A 2 596 487 entspricht bei einem Schieberventil die zylindrische Innenfläche der Gehäusestege, an der der Steuerkolben geführt ist.

Eine aus der US-A 4 516 594 bekannte Ventilanordnung enthält neben mehreren Sitzventilen mit eingegossenen Ventilsitzen auch ein Schieberventil mit einem Steuerkolben. Dieser befindet sich in einer Steuerbohrung, die teilweise durch eine eingegossene Buchse aus einem gegenüber dem Gußmaterial widerstandsfähigeren Material gebildet ist. Die Buchse ist innen mit einer Ausdrehung versehen, die als um die Buchsenbohrung herumlaufender Steuerraum zu betrachten ist. Die zwei Gehäusestege und der Boden, die den Steuerraum axial und radial begrenzen, sind also einstückig miteinander ausgebildet. Eine solche Gestaltung ermöglicht nur eine begrenzte radiale Tiefe des Steuerraums. Durch die ganze US-A 4 516 594 hindurch zieht sich der Gedanke, eine Mehrzahl von verschleißresistenten Gliedern vor dem Vergießen zu einem einzigen Bauteil zusammenzufügen.

Der Erfindung liegt die Aufgabe zugrunde, ein Ventilgehäuses gemäß dem Oberbegriff des Patentanspruchs 1 so weiterzuentwickeln, daß es möglich ist, den bei der Fertigbearbeitung anfallenden Ausschuß zu verringern, die Standzeit der Steuerkanten zu verlängern und größere Querschnitte der Steuerräume bei gegebenen Außenabmessungen des Ventilgehäuses zu erhalten.

Nach der Erfindung wird dies mit den kennzeichnenden Merkmalen des Anspruchs 1 erreicht. Dadurch, daß nur die hochbeanspruchten Gehäusebereiche aus einem diesen Beanspruchungen gewachsenen Material wie Stahl bestehen und damit in einfacher Weise als selbständige Teile mit dem Gießkern verbunden und gemeinsam mit diesen in die Gießform einzubringen sind, läßt sich der Gehäusekörper in bekannter Weise abgießen, wobei sich die mit dem Kern verbundenen selbständigen Teile formschlüssig und/oder stoffschlüssig mit dem Gehäusekörper verbinden bzw. verschmelzen.

Weitere Einzelheiten der Erfindung ergeben sich aus den Unteransprüchen sowie der nachfolgenden Beschreibung von Ausführungsbeispielen.

Es zeigen
- Figur 1: einen Axialschnitt durch ein abgegossenes Wegeventilgehäuse mit Sandkern und
- Figur 2: einen Axialschnitt durch eine Kernform für das Wegeventilgehäuse nach Figur 1.

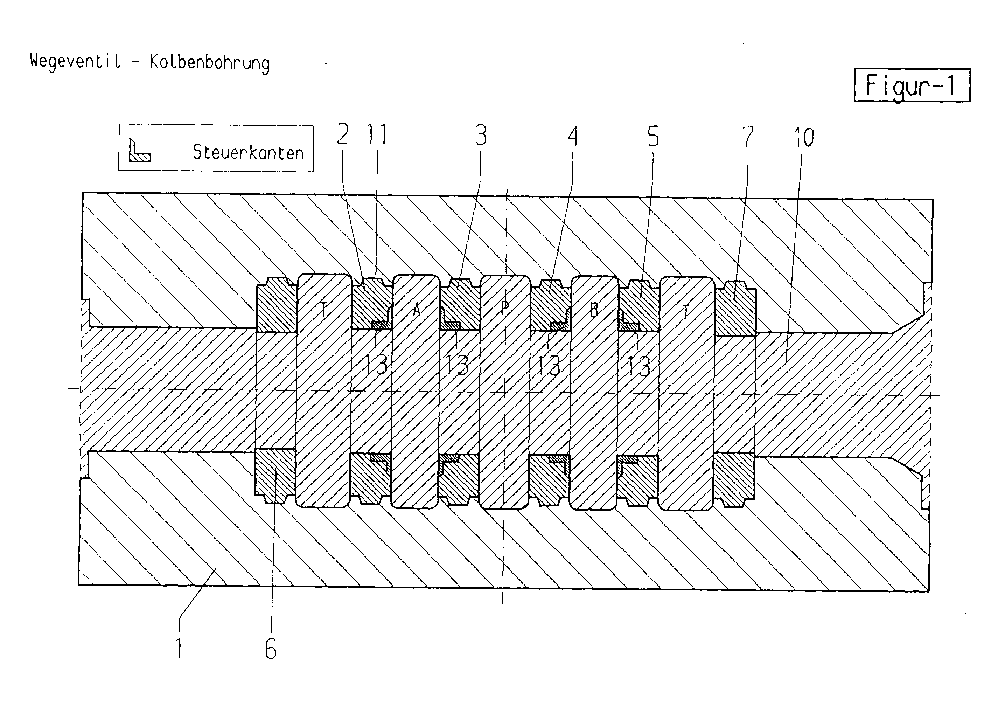

In Figur 1 ist mit 1 der aus Gußeisen abgegossene Gehäusekörper eines Wegeventils bezeichnet, das einen umlaufenden Pumpensteuerraum P, mit nicht dargestellten Verbrauchern in Verbindung stehende Arbeitssteuerräume A, B sowie zwei außenliegende Tanksteuerräume T aufweist. Die Steuerräume sind untereinander durch von Stahlringen gebildete Gehäusestege 2, 3, 4, 5 getrennt und die außenliegenden Tanksteuerräume T sind nach außen von Stahlringen 6 und 7 begrenzt. Die Stahlringe 2 bis 5 sind an drei Seiten und die Stahlringe 6 und 7 an zwei Seiten von dem Sandkern 10 umschlossen und gemeinsam mit dem Sandkern in die Gehäusegießform eingebracht worden. Die freie äußere Umfangsfläche 11 der Stahlringe wird beim Gießvorgang mit dem flüssigen Gußeisen durch Verschmelzen mit dem Gehäusekörper 1 verbunden. Nach Entfernen des Sandkernes 10 wird der innere dichter schraffierte Bereich 13 der Stahlringe fertigbearbeitet. Die Bereiche 13 dienen zur Führung des nicht dargestellten Steuerkolbens und als Steuerkanten, die mit entsprechenden Steuerkanten des nicht gezeigten Steuerkolbens zusammenwirken, indem benachbarte Steuerräume A-T, P-B bzw. P-A, B-T in die eine oder andere Durchflußrichtung des Mediums miteinander verbunden werden. Während der Fertigbearbeitung der Stahlringe besteht keine Gefahr, daß diese im Bereich der Steuerkanten ausbrechen können wie dies bei herkömmlichen Ventilgehäusen, bei denen auch die Gehäusestege aus Gußeisen bestehen, der Fall ist. Das Aufmaß der Stahlringe für deren Fertigbearbeitung kann wegen der größeren Festigkeit und Maßhaltigkeit kleiner gehalten werden als bei Gußeisen. Damit ergeben sich größere Steuerräume und entsprechend kleinere Durchflußverluste. Außerdem können die Steuerkanten und Führungsflächen der Stahlringe für den Steuerkolben nachträglich gehärtet werden, falls dies erforderlich sein sollte. Da der Gußwerkstoff für die Steuerfunktion ohne Bedeutung ist, kann dieser eine geringere Qualität aufweisen.

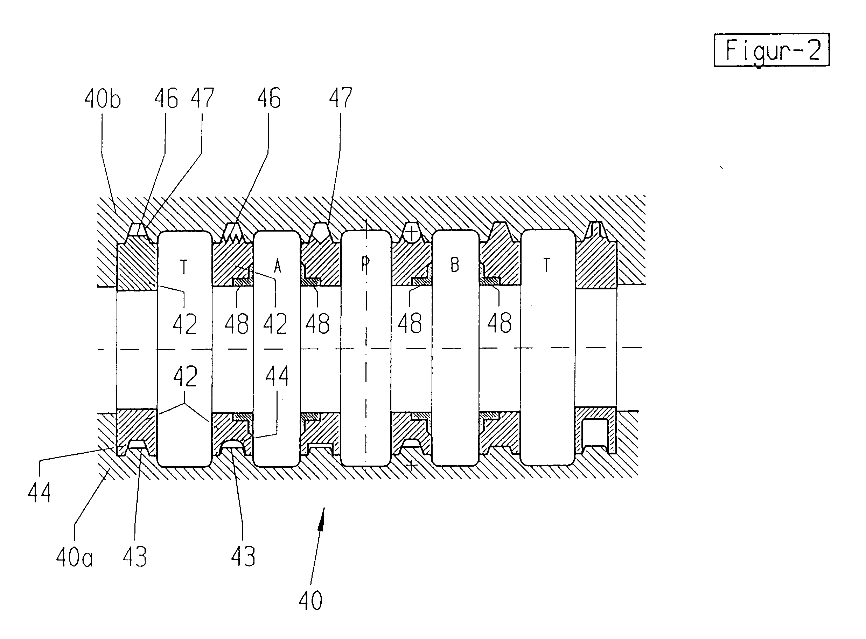

Die in Figur 2 gezeigte Kernform 40 zeigt in der unteren Hälfte 40a zur Aufnahme und gleichzeitigen Fixierung der Stahlringe 42 umlaufende trapezförmige Vorsprünge 43, die in umlaufende Nuten 44 der Stahlringe eingreifen. Die Nuten können wie dargestellt verschiedene Profile aufweisen. Diese Profile werden während des Gießvorganges mit flüssigem Eisen ausgefüllt, so daß die Ringe nach dem Erstarren des Gußeisens im Gehäusekörper fest und dicht verankert sind. Dies gilt auch bei alternativ zu Nuten möglichen umlaufenden Vorsprüngen 46 am Außenumfang der Ringe entsprechend der oberen Hälfte 40b der Kernform. In diesem Fall weist die Kernform umlaufende Nuten 47 zur Aufnahme der Vorsprünge der Ringe auf. Das gleiche Nutenprofil bzw. Vorsprungprofil in der Kernform kann verschiedene Profilausbildungen der Vorsprünge bzw. Nuten am Umfang der Ring aufnehmen.

Durch die profilierte Ausbildung des Außenumfanges der Ringe und entsprechender Ausbildung von Aufnahmeprofilen in der Kernform sitzen die Ringe während des Schießens des Kernes unverrückbar in der Kernform fest. Die eng schraffierten Bereiche 48 der Ringe bilden die Steuerkanten, die mit entsprechenden Steuerkanten am nicht dargestellten Steuerkolben zusammenarbeiten und die besonders hoch beanspruchten Stellen im Ventilgehäuse sind.

## Patentansprüche

1. Ventilgehäuse aus Metall für eine hydraulisches Schieberventil mit einem gegossenen Gehäusekörper (1), in dem sich eine Steuerbohrung zur Aufnahme eines in der Steuerbohrung axial verschiebbaren Steuerkolbens befindet, wobei an der Steuerbohrung mehrere axial voneinander beabstandete Steuerräume (A, B, P, T) ringförmig herumlaufen, die durch Gehäusestege voneinander getrennt sind, die zur Bildung von Steuerkanten (13) an ihrer der Steuerbohrung zugewandten Innenseite und in einem Steuerkantenbereich begrenzter radialer Tiefe an zumindest einer ihrer axialen Stirnseiten fertigbearbeitet sind,
**dadurch gekennzeichnet**, daß jeder der mehreren Gehäusestege zumindest im Bereich der Fertigbearbeitung aus einem selbständigen Metallring (2, 3, 4, 5, 42) gebildet ist, der aus einem der Beanspruchung weitgehend standhaltendem Material besteht und, beim Guß des Gehäusekörpers (1) mit dem Gehäusekörper (1) verbunden worden ist,
wobei die Metallringe (2, 3, 4, 5, 42) eine einen Steuerraum (A, B, P, T) axial begrenzende Stirnfläche besitzen, die über den Bereich der Fertigbearbeitung hinaus frei von Gußmaterial ist.

2. Ventilgehäuse nach Anspruch 1, dadurch gekennzeichnet, daß die Stirnflächen der Metallringe (2, 3, 4, 5, 42) bis zu einer Kante zwischen einer Stirnfläche und dem Außenumfang der Metallringe (2, 3, 4, 5, 42) frei von Gußmaterial sind und daß die Metallringe (2, 3, 4, 5, 42) an ihrem Außenumfang am Gußkörper (1) axial gehalten sind.

3. Ventilgehäuse nach Anspruch 1 oder 2, dadurch gekennzeichnet, daß die Metallringe (2, 3, 4, 5, 42) durch Anschmelzen beim Guß an den Berührungsstellen mit dem Gehäusekörper (1) stoffschlüssig verbunden sind.

4. Ventilgehäuse nach einem vorhergehenden Anspruch, dadurch gekennzeichnet, daß die Metallringe (2, 3, 4, 5, 42) am Außenumfang eine Ausnehmung (44) oder einen Vorsprung (46) aufweisen.

5. Ventilgehäuse nach Anspruch 4, dadurch gekennzeichnet, daß die Metallringe (2, 3, 4, 5, 42) wenigstens eine an ihrem Außenumfang umlaufende Nut (44) aufweisen.

6. Ventilgehäuse nach Anspruch 4, dadurch gekennzeichnet, daß die Metallringe (2, 3, 4, 5, 42) wenigstens einen an ihrem Außenumfang umlaufenden Steg (46) aufweisen.

7. Ventilgehäuse nach Anspruch 2, dadurch gekennzeichnet, daß die Steuerräume (A, B, P, T) radial tiefer reichen als die Kante zwischen den freien Stirnflächen und dem Außenumfang der angrenzenden Metallringe (2, 3, 4, 5, 42) und daß die Steuerräume (A, B, P, T) außerhalb der Kante die gleiche axiale Breite wie im Bereich der Metallringe (2, 3, 4, 5, 42) haben.

8. Ventilgehäuse nach einem vorhergehenden Anspruch, dadurch gekennzeichnet, daß, axial gesehen, zwei äußere Steuerräume (T) und wenigstens ein innerer Steuerraum (A, B, P) vorhanden sind und daß die äußeren Steuerräume (T) auch an der vom inneren Steuerraum (A, B, P) aus gesehen äußeren Seite durch einen eingegossenen Metallring (6, 7, 42) axial begrenzt sind.

9. Kernform (40 )zur Herstellung eines Ventilgehäuses gemäß Anspruch 4, dadurch gekennzeichnet, daß sie zur Aufnahme und Festlegung eines Metallrings (2, 3, 4, 5, 42) eine einen Vorsprung (46) am Außenumfang des Metallrings (2, 3, 4, 5, 42) aufnehmende Ausnehmung (47) oder einen in eine Ausnehmung (44) am Außenumfang des Metallrings (2, 3, 4, 5, 42) eintauchenden Vorsprung (43) aufweist.

10. Kernform (40) nach Anspruch 9, dadurch gekennzeichnet, daß deren Ausnehmung (47) oder Vorsprung (43) einen trapezförmigen Querschnitt aufweist.

## Claims

1. A valve housing made from metal for a hydraulic spool valve with a cast housing body (1) having a control bore for the purpose of accommodating a control spool which is axially displaceable within the control bore, whereby several annular control chambers (A, B, P, T) extending circumferentially around the control bore are arranged axially spaced in relation to each other and separated by housing lands which, for the purpose of forming control edges (13), are finish-machined at their inner surface facing the control bore and, within a control edge zone of limited radial depth, at at least one of their axial lateral faces
**characterized in that** each of the several housing lands is developed, at least in the finish-machined zone, as a distinct metal ring (2, 3, 4, 5, 42) consisting of a material capable of withstanding to a large extent the forces to be exerted upon it and joined to the housing body (1) during casting of the housing body (1), these metal rings (2, 3, 4, 5, 42) having a lateral face axially limiting a control chamber (A, B, P, T), which lateral face is free of cast material over an area extending beyond the finish-machined zone.

2. A valve housing according to Claim 1, characterized in that the lateral faces of the metal rings (2, 3, 4, 5, 42) are free of cast material up to an edge between a lateral face and the outer circumference of the metal rings (2, 3, 4, 5, 42) and that the metal rings (2, 3, 4, 5, 42) are axially retained in the cast body (1) at their outer circumference.

3. A valve housing according to Claim 1 or 2, characterized in that the metal rings (2, 3, 4, 5, 42) are joined metallically with the housing body (1) through fusion at the contact points with the housing body (1) during casting.

4. A valve housing according to any of the preceding claims, characterized in that the metal rings (2, 3, 4, 5, 42) are provided with a recess (44) or a projection (46) at their outer circumference.

5. A valve housing according to Claim 4, characterized in that the metal rings (2, 3, 4, 5, 42) are provided with at least one annular groove extending around their outer circumference.

6. A valve housing according to Claim 4, characterized in that the metal rings (2, 3, 4, 5, 42) are provided with at least one annular strap (46) extending around their outer circumference.

7. A valve housing according to Claim 2, characterized in that the control chambers (A, B, P, T) extend radially deeper than the edge between the exposed lateral faces and the outer circumference of the adjoining metal rings (2, 3, 4, 5, 42) and that the control chambers (A, B, P, T) have the same axial width beyond the edge as in the area of the metal rings (2, 3, 4, 5, 42).

8. A valve housing according to any of the preceding claims, characterized in that, viewed axially, two outer control chambers (T) and at least one inner control chamber (A, B, P) are present and that the outer control chambers (T) are axially limited on their outer side as seen from the inner control chamber (A, B, P) by a cast-in metal ring (6, 7, 42).

9. A core mould (40) for the production of a valve housing according to Claim 4, characterized in that, for the purpose of accommodating and immobilizing a metal ring (2, 3, 4, 5, 42), the core mould is provided with a recess (47) to accommodate a projection (46) at the outer circumference of the metal ring (2, 3, 4, 5, 42) or a projection (43) that extends into a recess (44) at the outer circumference of the metal ring (2, 3, 4, 5, 42).

10. A core mould (40) according to Claim 9, characterized in that its recess (47) or projection (43) is developed with a trapezoidal cross-section.

## Revendications

1. Un corps de valve en métal pour une valve hydraulique à distributeur, dotée d'un corps (1) de valve en fonte, à l'intérieur duquel un conduit de pilotage est destiné à héberger un tiroir de pilotage pouvant être amené à coulisser de façon axiale dans le conduit de pilotage, cependant que plusieurs chambres (A, B, P, T) de pilotage annulaires, qui sont distantes les unes des autres dans la direction axiale, font le tour du conduit de pilotage de façon annulaire, sont séparées les unes des autres par des entretoises de corps de valve et, afin de former des arêtes (13) de commande, sont usinées avec une finition complète sur leur face intérieure tournée vers le conduit de pilotage ainsi que sur au moins une de leurs faces axiales dans une zone d'arête de commande limitée en profondeur radiale, **caractérisé en ce que** chacune des entretoises de corps de valve, qui sont plusieurs, est, au moins dans sa zone de finition complète, constituée par un anneau (2, 3, 4, 5, 42) de métal indépendant, lequel est fabriqué dans un matériau résistant largement à la sollicitation et lequel fut relié au corps (1) de valve pendant le moulage du corps (1) de valve, cependant que les anneaux (2, 3, 4, 5, 42) de métal possèdent une face qui délimite de façon axiale une chambre (A, B, P, T) de pilotage et qui est libre de tout matériau de fonte au-delà de la zone de finition complète.

2. Un corps de valve conforme à la revendication n° 1, **caractérisé en ce que** les faces des anneaux (2, 3, 4, 5, 42) de métal sont libres de tout matériau de fonte jusqu'à une arête entre une face et la périphérie extérieure de l'anneau (2, 3, 4, 5, 42) de métal et que les anneaux (2, 3, 4, 5, 42) de métal sont maintenus de façon axiale sur leur périphérie au niveau du corps (1) de valve en fonte.

3. Un corps de valve conforme à la revendication n°1 ou n°2, **caractérisé en ce que** les anneaux (2, 3, 4, 5, 42) de métal et le corps (1) de valve sont liés ensemble dans leur matière pendant la coulée, au niveau des zones de contact.

4. Un corps de valve conforme à une revendication précédente, **caractérisé en ce que** les anneaux (2, 3, 4, 5, 42) de métal présentent une entaille (44) ou une protubérance (46) au niveau de leur périphérie externe.

5. Un corps de valve conforme à la revendication n° 4, **caractérisé en ce que** les anneaux (2, 3, 4, 5, 42) de métal présentent au moins une rainure (44) sillonnant leur périphérie complète.

6. Un corps de valve conforme à la revendication n° 4, **caractérisé en ce que** les anneaux (2, 3, 4, 5, 42) de métal présentent au moins une entretoise (46) décrivant leur périphérie complète.

7. Un corps de valve conforme à la revendication n° 2, **caractérisé en ce que** les chambres (A, B, P, T) de pilotage ont une profondeur radiale supérieure à celle de l'arête située entre les faces libres et la périphérie externe des anneaux (2, 3, 4, 5, 42) de métal voisins et que les chambres (A, B, P, T) de pilotage ont la même largeur axiale au-delà de l'arête que dans la zone des anneaux (2, 3, 4, 5, 42) de métal.

8. Un corps de valve conforme à une revendication précédente, **caractérisé en ce que**, vu dans le sens axial, deux chambres (T) de pilotage extérieures et au moins une chambre (A, B, P) intérieure sont présentes, et que, vu de la chambre (A, B, P) intérieure, les chambres (T) de pilotage extérieures sont limitées dans la direction axiale du côté extérieur aussi par un anneau (6, 7, 42) de métal coulé dans la fonte.

9. Un moule (40) à noyau destiné à la fabrication d'un corps de valve conforme à la revendication n°4, **caractérisé en ce qu**'il présente soit une entaille (47) recevant une protubérance (46) au niveau de la périphérie extérieure de l'anneau (2, 3, 4, 5, 42) de métal, soit une entretoise (43) pénétrant dans une entaille (44) au niveau de la périphérie extérieure de l'anneau (2, 3, 4, 5, 42) de métal, afin de pouvoir recevoir et fixer un anneau (2, 3, 4, 5, 42) de métal.

10. Un moule (40) à noyau conforme à la revendication n° 9, **caractérisé en ce que** son entaille (47) ou son entretoise (43) présente une section trapézoïdale.
